# NEUE EUROPÄISCHE PATENTSCHRIFT

(11) **EP 0 756 839 B2**
(45) Veröffentlichungstag und Bekanntmachung des Hinweises auf die Entscheidung über den Einspruch: **09.01.2002**
(45) Hinweis auf die Patenterteilung: 02.09.1998
(21) Anmeldenummer: 96112442.7
(22) Anmeldetag: 01.08.1996
(51) Int. Cl.: A47B 77/02, A47B 96/18, B32B 19/04, B32B 33/00

(54) **Arbeitsplatte mit Deckschicht aus Metallblech**
Worktop with steel upper layer
Plan de travail à surface en tôle d'acier

(30) Priorität: 04.08.1995 DE 19528719
(43) Veröffentlichungstag der Anmeldung: 05.02.1997
(73) Patentinhaber: bulthaup GmbH & Co. Küchensysteme, D-84153 Aich (DE)
(72) Erfinder: Langer, Otto, 84494 Neumarkt-St. Veith (DE); Haberl, Thomas, 85356 Freising/Attaching (DE); Hamberger, Josef, 84155 Bodenkirchen (DE)
(74) Vertreter: May, Hans Ulrich, Dr.

(56) Entgegenhaltungen:
- DE-A- 2 628 950
- DE-A- 2 656 713
- DE-A- 2 712 123
- DE-A- 3 002 452
- DE-A- 3 227 058
- DE-U- 7 909 181
- DE-U- 9 115 187
- DE-U- 9 408 038
- FR-A- 1 057 130
- FR-A- 1 481 079
- GB-A- 1 153 419

## Beschreibung

Die Erfindung betrifft eine Küchenarbeitsplatte zur Verwendung in der Küche.

Derartige Arbeitsplatten müssen eine mechanisch widerstandsfähige, also mindestens kratzfeste und möglichst schnittfeste, im wesentlichen glatte und leicht zu reinigende, wasserfeste und bis mindestens 180 °C wärmebeständige Deckschicht aufweisen, um den starken Beanspruchungen im Gebrauch zu widerstehen und ein ansprechendes Aussehen zu bewahren. Solche Arbeitsplatten von in allgemeinen mindestens 30 mm Dicke bestehen heute zumeist aus einer Trägerplatte aus einem Holzwerkstoff, der mit einer Deckschicht aus Kunststoff versehen ist und auf dessen Unterseite eine entsprechende Schicht als Gegenzug aufgepreßt ist. Solche Arbeitsplatten müssen auch am Einbauort bearbeitbar sein, um z.B.einen Ausschnitt zum Einsetzen einer Spüle herzustellen.

Es ist auch bekannt, DE-A-27 12 123 Arbeitstische mit einer aufgelegten und gegebenenfalls die Kanten umfassenden angepaßten Verkleidung aus Metallblech zu versehen, die jedoch für jeden Einzelfall in den bestimmten Abmessungen der Platte hergestellt und an dieser mechanisch befestigt werden muß. Das ist aufwendig, besonders hinsichtlich der Formung der übergreifenden Kanten, und eine sichere und saubere Befestigung erfordert einen erheblichen Aufwand und ist praktisch nicht möglich, wenn am Einsatzort noch ein Ausschnitt hergestellt werden soll.

Der Erfindung liegt nun die Aufgabe zugrunde, eine Küchenarbeitsplatte, die aus einer Trägerplatte aus Holzwerkstoff und einer aufgeklebten Deckschicht besteht, mit einem Metallblech als Deckschicht so auszubilden, daß mit geringem Aufwand eine dauerhafte Verbindung zwischen Trägerplatte und Metallblech erhalten wird, welche die eingangs angegebenen, an eine Arbeitsplatte gestellten Forderungen erfüllt und verschiedene Kantengestaltungen, eine beliebige Geometrie (Grundriß) der Arbeitsplatten sowie Ausschnitte und flächenbündige Einbauten in denselben ermöglicht, wobei Ausschnitte auch am Einsatzort hergestellt werden können.

Diese Aufgabe der Erfindung wird gelöst durch eine Küchenarbeitsplatte mit den Merkmalen des Anspruchs 1. Bevorzugte Ausführungsformen sind in den Unteransprüchen angegeben.

Die Erfindung wird weiter erläutert durch die folgende Beschreibung von Ausführungsbei spielen, die sich auf die beigefügten Zeichnungen bezieht. Hierin zeigen:
Fig.1 einen schematischen Querschnitt des Randbereiches einer ersten Ausführungsform der Küchenarbeitsplatte;
Fig.2 einen schematischen Querschnitt des Randbereiches einer zweiten Ausführungsform der Arbeitsplatte;
Fig.3 einen schematischen Querschnitt des Randbereiches einer dritten Ausführungsform der Arbeitsplatte;
Fig.4 einen schematischen Querschnitt des Randbereiches einer vierten Ausführungsform der Arbeitsplatte;
Fig.5 einen schematischen Querschnitt einer Einzelheit einer Arbeitsplatte gemä ß einer der Fig. 1 bis 4 mit einem flächenbündig eingebauten Kochfeld;
Fig.6 einen schematischen Querschnitt einer Einzelheit einer Arbeitsplatte gemäß einer der Figuren 1 - 4 mit einem bündig eingebauten Spülebecken;
Fig.7 einen schematischen Querschnitt einer Arbeitsplatte gemäß einer der Fig.1 - 4 mit einer bündig eingesetzten Müll-Abwurföffnung.

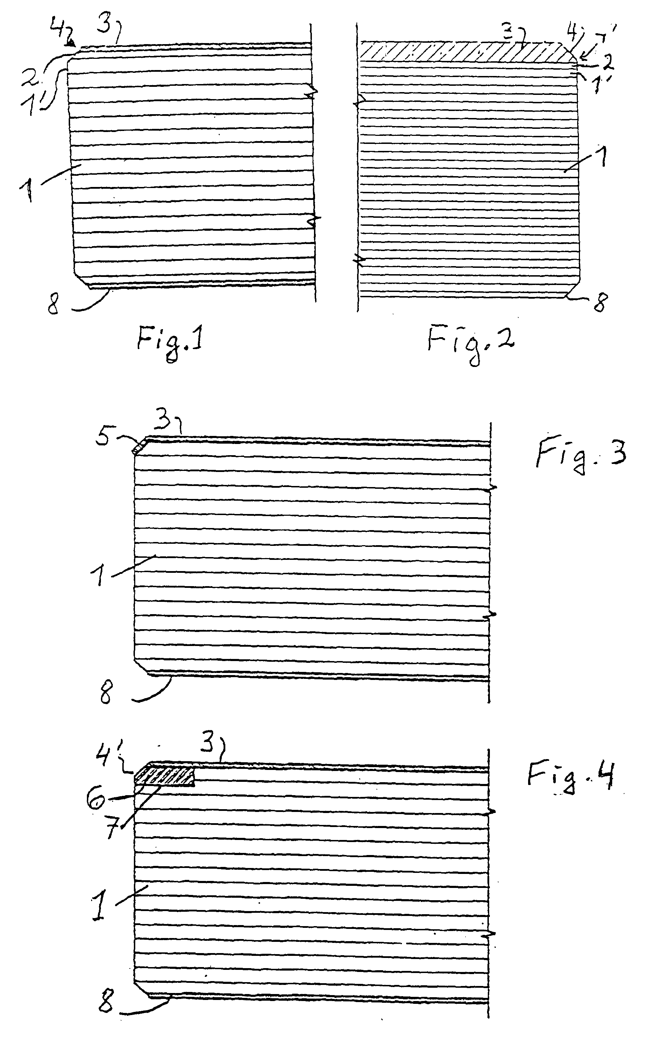

Die in Fig.1 gezeigte Küchenarbeitsplatte besteht aus einer Trägerpiatte 1 aus einem Holzwerkstoff, beispielsweise einer Birke-Multiplex-Platte mit 27 Lagen, die wasserfest verleimt sind. Die Deckschicht 3 besteht aus einem Edelstahlblech von vorzugsweise 0,8 bis 3 mm Dicke. Zwischen der Deckschicht und der Trägerplatte ist eine dünne Zwischenschicht 2 aus einem vliesartigen Material auf mineralischer Basis, wie Glastaservlies, angeordnet, die mit der Trägerplatte 1 und der Deckschicht 3 durch einen Kleber verklebt ist, der eine gewisse Elastizität und vor allem eine hohe Wärmebeständigkeit aufweist, beispielsweise ein Kleber auf Silikon-Basis. Die Anordung einer derartigen Zwischenschicht ist erforderlich, um im Hinblick auf die sehr unterschiedlichen Ausdehnungskoeffizienten der Trägerplatte und der Deckschicht aus Metallblech eine verzugfreie Platte mit hoher Wärmebeständigkeit zum Abstellen heißer Töpfe neben Kochmulden zu erhalten. Geeignete Klebstoffe, welche die geforderten hohen Ansprüche erfüllen, sind im Handel erhältlich.

Auf der Unterseite der Platte ist als Gegenzug eine Schichtstoffplatte 8 aufgepreßt. In der ersten Ausführungsform (Fig.1) ist die Deckschicht ein ebenes Metallblech 3 aus Edelstahl. Infolge der ausgezeichneten Verbindung mit der Trägerplatte 1 aus Holzwerkstoff ist es möglich, an den Kanten eine angefräste Fase 4 auszubilden, welche in die Trägerplatte übergeht und eine formschöne und im Gebrauch problemlose Kante bildet. Die Oberfläche der Deckschicht kann geschliffen und nachgebürstet sein und alle sichtbaren Kanten sind gefast. In der Arbeitsplatte kann mit entsprechenden Trenn-, Schleif- und Fräswerkzeugen auch ein Ausschnitt zur Aufnahme z.B.einer Spule in der Werkstatt oder selbst am Einsatzort hergestellt werden. Außerdem kann die Arbeitsplatte, wie leicht ersichtlich in beliebiger Geometrie, nämlich Umriß oder Grundriß, ob eckig vor- oder zurückspringend oder rund hergestellt werden, indem sie entsprechend zugeschnitten und an den Kanten die Fase 4 angefräst wird.

In einer in Fig.2 gezeigten besonders bevorzugten zweiten Ausführungsform ist die Fase 4 nur an der Kante des 3 mm dicken Metallblechs 3 und nur einen Teil seiner Dicke ausgebildet, so daß ein vertikaler Kantenabschnitt 4' verbleibt, der glatt an die Seitenfläche der Trägerplatte 1 anschließt und auch bei einer eventuellen geringen Schrumpfung der Trägerplatte keine spitzwinklige messerartige Kante mit Verletzungsgefahr bildet.

Bei einer in Fig.3 gezeigten dritten Ausführungsform weist das Metallblech 3 eine gebördelte Abkantung 5 in Form einer Fase auf, welche den Rand der Zwischenschicht 2 und die oberste Schicht 1' der Trägerplatte 1 überdeckt. Eine solche Abkantung kann auch bei einer eckigen, nicht aber bei einer runden Geometrie ausgebildet werden.

Bei einer in Fig 4 gezeigten vierten, bevorzugten Ausführungsform weist wenigstens ein Rand des Metallblechs 3 eine Kantenaufdopplung oder Kantenverstärkung 6 auf, welche bündig in einer entsprechenden Ausnehmung 7 der Trägerplatte sitzt und in diese eingeklebt ist. Diese Ausbildung ermöglicht eine angefräste ebene oder gerundete Fase 4, die im allgemeinen nur über einen Teil der Gesamtdicke von Metallblech und Kantenaufdopplung reicht, so daß ein vertikaler Bereich 4' sich in der Seitenfläche der Trägerplatte 1 fortsetzt und ein besonders sicherer und optisch ansprechender Abschluß der oberen Kante der Arbeitsplatte erreicht wird. Die Multiplex-Platte 1 ist unterhalb des Metallblechs 3, 6 wasserfest lackiert und zeigt dadurch den Charakter einer Massivholz-Kante.

In der einfachsten Gestaltung ist bei dieser Ausführungsform nur eine gerade Ausnehmung und Kantenverstärkung an der Vorderkante der Arbeitsplatte vorgesehen. Wenn eine solche erfindungsgemäße Arbeitsplatte mit beliebiger Geometrie gewünscht wird, muß einerseits die Trägerplatte 1 entsprechend geschnitten und an den gewünschten Seiten mit der Ausnehmung 7 versehen und das Metallblech 3 mit einer komplementären Kantenverstärkung 7 versehen werden, bevor beide erfindungsgemäß über eine Zwischenschicht 2 miteinander verklebt werden, was zweckmäßigerweise werkseitig, jedoch gegebenenfalls auch am Einsatzort erfolgen kann.

Die erfindungsgemäße Arbeitsplatte kann insbesondere auch mit einem oder mehreren Ausschnitten in ihrer Fläche ausgebildet sein, welche verschiedene Funktionselemente bündig aufnehmen können, welche die Benutzung der Arbeitsplatte für verschiedene Arbeiten ermöglichen oder erleichtern.

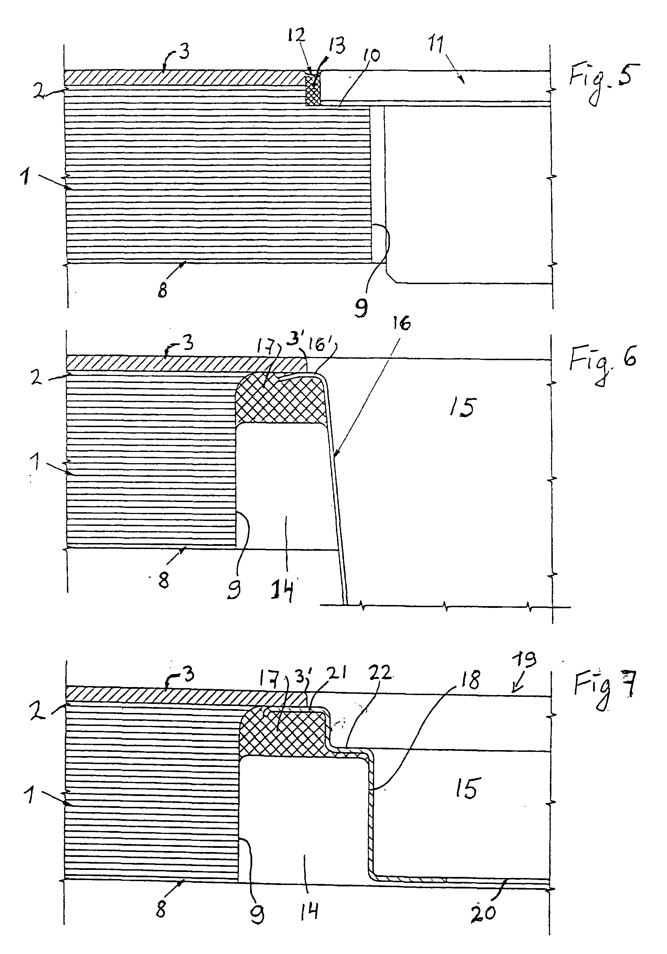

Die in Fig.5 gezeigte Abwandlung zeigt einen Ausschnitt 9 der Arbeitsplatte, der im Bereich der Trägerplatte 1 etwas unterhalb des Metallblechs 3 mit einem Absatz 10 ausgebildet ist, auf dem der Rand eines in den Ausschnitt 9 eingesetzten Kochfeldes 11 aufliegt. Mit "Kochfeld" wird die Arbeitsfläche eines elektrischen Küchenherdes, besonders mit mehreren Kochstellen bezeichnet, die insbesondere durch eine Glaskeramikplatte abgedeckt sind. Der Abstand des Absatzes von der Oberfläche des Metallblechs, also der Arbeitsfläche, ist so bemessen, daß das Kochfeld flächenbündig mit dieser Oberfläche ist, wobei ein zwischen ihm und der Trägerplatte und dem Metallblech ausgebildeter vertikaler Spalt 12 durch eine eingelegte oder vorzugsweise in flüssiger Form eingebrachte und am Ort aushärtende elastische Dichtung 13 flüssigkeitsdicht versiegelt ist. Durch den flächenbündigen Einsatz des Kochfeldes erhält man eine durchgehende Arbeitsfläche, auf der Kochgeräte, wie Töpfe und Pfannen ohne Anheben einfach verschoben werden können, wodurch mögliche Beschädigungen der Deckplatte aus Glaskeramik eines Kochfeldes durch heftiges Aufsetzen schwerer Töpfe vermieden werden, da diese einfach ohne Behinderung durch eine Kochfeldeinfassung horizontal verschoben werden können.

Ähnliche Vorteile ergeben sich aber auch beim flächenbündigen Einsetzen einer sogenannten Kochmulde mit mehreren Kochplatten eines elektrischen Küchenherdes.

Fig.6 zeigt eine weitere Abwandlung der in den Figuren 1 - 4 gezeigten Arbeitsplatte, wobei der Ausschnitt 9 im Bereich der Trägerplatte einen größeren Durchmesser hat als im Bereich des Metallblechs 3, also unter diesem eine Ausnehmung 14 bildet. Ein Hohlkörper 15 in Form eines Spülebeckens 16 aus Metallblech, besonders aus Edelstahl ist von unten in die Ausnehmung 14 eingesetzt, so daß sein oberer, nach außen umgebogener Rand 16' von unten an das Metallblech 3 anstößt. Das Spülebecken ist in dieser Lage durch ein Verbindungselement 17 an der Trägerplatte 1 gehalten. Im gezeigten Ausführungsbeispiel besteht das Verbindungselement aus einem ringförmigen Körper aus Kunststoff, der den oberen Rand des Spülebeckens von unten und außen umgibt und seinerseits an der Trägerplatte 1 und der Unterseite des in die Ausnehmung hineinragenden Randes des Metallblechs 3 angeklebt ist, wodurch eine dauerhafte und flüssigkeitsdichte bündige Verbindung zwischen dem Metallblech 3 und dem Spülebecken geschaffen wird. Der Einbau des Spülebeckens erfolgt also praktisch flächenbündig. Besonders zweckmäßig besteht das Verbindungselement 17 aus einem Gießharz, das bei umgekehrter Lage der Arbeitsplatte (Deckschicht 3 unten liegend), in die Ausnehmung 14 nach Einlegen des Spülebeckens 16 gegossen wird und nach Aushärtung das Spülebecken 16 mit dem Metallblech 3 fest und dicht, besonders feuchtigkeitsdicht verbindet.

Fig.7 zeigt eine weitere Abwandlung der erfindungsgemäßen Arbeitsplatte mit einem Ausschnitt 9, der ähnlich wie der Ausschnitt der Fig.6 ausgebildet ist, wobei als Hohlkörper statt eines Spülebeckens die im ganzen trichterförmige Auskleidung einer Müllabwurf- Öffnung eingesetzt ist, die im gezeigten Beispiel aus einem Element 18 aus Metallblech, besonders aus Edelstahl, besteht, das im ganzen hohlzylindrisch, mit einer oberen Öffnung 19 und einer unteren Öffnung 20, einem oberen nach außen horizontal umgebogenen Rand 21 und einem in einem Abstand von etwa 10 bis 30 mm vom oberen Rand nach innen gezogenen Absatz 22 ausgebildet ist. Diese Auskleidung ist ähnlich wie das Spülebecken der Fig.5 durch ein Verbindungselement 17 an der Trägerplatte 1 so befestigt, daß mindestens ein Teil seines oberen Randes von unten gegen den in den Ausschnitt hineinragenden Rand des Metallblechs 3 praktisch dicht anliegt, so daß keine Flüssigkeit und Schmutz zwischen die aneinanderstoßenden Metallbleche eindringen kann. Das Verbindungselement 17 kann wie bei der Ausführungsform der Fig.5 aus einem etwa ringförmigen Kunststoffkörper bestehen, der mit dem Metallblech der Auskleidung und der gegenüberliegenden Trägerplatte mindestens im oberen Bereich der Auskleidung fest verbunden, beispielsweise verklebt ist oder vorzugsweise aus Gießharz besteht.

Eine solche Ausbildung eines Ausschnitts der Arbeitsplatte erleichtert das Arbeiten auf dieser, indem Abfälle einfach in den Müllabwurf geschoben werden können, unter dem sich ein entsprechender Auffang-Behälter (nicht gezeigt) befindet. Der Absatz im oberen Bereich der Auskleidung kann als Auflage für einen die Auflage abdeckenden nicht gezeigten Deckel dienen, der flächenbündig mit der Arbeitsplatte ausgebildet sein kann.

Die Ausschnitte der Arbeitsplatte können zweckmäßig und mit besonderer Genauigkeit mit einer Laser-Maschine hergestellt werden.

Die Erfindung schafft erstmals eine Arbeitsplatte mit Deckschicht aus Metallblech, die allen Forderungen nach leichter Herstellbarkeit, guter Bearbeitbarkeit der sichtbaren Kanten durch Abfräsen, besten Gebrauchseigenschaften, mechanischer Festigkeit ohne Verziehen, Wärmefestigkeit und gutem Aussehen genügt und zumindest in der ersten, zweiten und vierten Ausführungsform alle gewünschten Geometrien ermöglicht, die in der Küchenplanung gefordert werden, und auch die Herstellung von Ausschnitten zuläßt, in die Funktionselemente, wie Kochfeld, Spüle und Müllabwurf-Öffnung an einer beliebigen, für den Arbeitsablauf ergonomisch günstigen Stelle flächenbündig eingebaut werden können, was für einen besonders günstigen Ablauf der auf der Arbeitsplatte vorzunehmenden Arbeiten und zu einer besonders einfachen Sauberhaltung des Arbeitsplatzes sorgt, da schmutzfangende Rillen und Spalten vermieden werden.

### Bezugszeichenliste

- 1: Trägerplatte
- 1': oberste Schicht der Trägerplatte
- 2: Zwischenschicht (Glasfaservlies)
- 3: Deckschicht (Metallblech)
- 3': Vorderkante am Ausschnitt
- 4: Fase
- 4': vertikaler Kantenabschnitt
- 5: gebördelte Abkantung
- 6: Kantenverstärkung
- 7: Ausnehmung
- 8: Schichtstoffplatte (Gegenzug)
- 9: Ausschnitt
- 10: Absatz der Trägerplatte
- 11: Kochfeld
- 12: vertikaler Spalt
- 13: elastische Dichtung
- 14: Ausnehmung
- 15: Hohlkörper
- 16: Spülebecken
- 16': oberer Rand
- 17: Verbindungselement (aus Gießharz)
- 18: Auskleidungselement
- 19: obere Öffnung
- 20: untere Öffnung
- 21: oberer Rand
- 22: innerer Absatz

## Patentansprüche

1. Küchen-arbeitsplatte mit einer Trägerplatte aus Holzwerkstoff und einer aufgeklebten Deckschicht, **dadurch gekennzeichnet, daß** die Deckschicht aus einem Metallblech (3) besteht, das über eine Zwischenschicht (2) aus vliesartigem Material auf mineralischer Basis mit der Trägerplatte (1) verklebt ist.

2. Arbeitsplatte nach Anspruch 1, **dadurch gekennzeichnet, daß** das Metallblech (3) ein Edelstahlblech ist.

3. Arbeitsplatte nach Anspruch 1 oder 2, **dadurch gekennzeichnet, daß** das Metallblech (3) die Zwischenschicht (2) und die oberste Schicht (1') der Trägerplatte (1) an wenigstens einer der Arbeitsplattenkanten eine angefräste Fase (4) aufweisen.

4. Arbeitsplatte nach Anspruch 1 oder 2, **dadurch gekennzeichnet, daß** das Metallblech (3) an wenigstens einer geraden Kante der Arbeitsplatte eine gebördelte Abkantung (5) in Form einer Fase aufweist, welche den Rand der Zwischenschicht (2) und der obersten Schicht (1') der Trägerplatte (1) überdeckt.

5. Arbeitsplatte nach Anspruch 1 oder 2, **dadurch gekennzeichnet, daß** das Metallblech (3) an wenigstens einem seiner Ränder eine Kantenaufdopplung oder Kantenverstärkung (6) aufweist, welche bündig in einer entsprechenden Ausnehmung (7) der Trägerplatte (1) sitzt und in diese eingeklebt ist.

6. Arbeitsplatte nach einem der Ansprüche 1 - 3 und 5, **dadurch gekennzeichnet, daß** das Metallblech (3) gegebenenfalls mit seiner Kantenaufdopplung (6) eine Gesamtdicke von etwa 3 mm hat und nur über einen Teil der Gesamtdicke eine angefräste ebene oder gerundete Fase (4) aufweist.

7. Arbeitsplatte nach einem der Ansprüche 1 bis 3, 5 und 6, **dadurch gekennzeichnet, daß** sie eine eckige und/oder runde Geometrie aufweist

8. Arbeitsplatte nach einem der Ansprüche 1 bis 7, **dadurch gekennzeichnet, daß** sie einen Ausschnitt (9) mit einem Absatz (10) aufweist, in den ein Kochfeld (11) flächenbündig einsetzbar ist, das durch eine elastische Dichtung (13) gegenüber der Deckschicht (3) aus Metallblech versiegelt ist.

9. Arbeitsplatte nach einem der Ansprüche 1 bis 8, **dadurch gekennzeichnet, daß** sie einen Ausschnitt (9) aufweist, in welchem die Deckschicht aus Metallblech (3) gegenüber der Tragerplatte (1) vorspringt, und daß die Vorderkante (3') dieses Vorsprungs bündig auf dem nach außen gerichteten oberen Rand (15') eines eingesetzten Hohlkörpers (15) aus Metallblech, wie eines Spulebeckens (16) oder eines Auskleidungselements eines Müllabwurfs (18), aufliegt, wobei der Hohlkörper (15) an der Trägerplatte (1) durch ein unter seinen oberen Rand (15') reichendes, mit der Trägerplatte (1) und gegebenenfalls der Deckschicht (3) verbundenes Verbindungselement (17) befestigt ist.

10. Arbeitsplatte nach Anspruch 9, **dadurch gekennzeichnet, daß** das Verbindungselement (17) ein unter dem oberen Rand des eingesetzten Hohlkörpers angeordnetes und mit diesem sowie einem Teil der Außenseite der Seitenwand des Hohlkörpers und dem diesen gegenüberliegenden Bereich des Ausschnitts der Trägerplatte (1) fest verbundenes, besonders eingeklebtes Kunststoffelement, besonders aus Gießharz, ist.

## Claims

1. Kitchen worktop with a support panel of wood material and a glued-on top layer, **characterised in that** the top layer is composed of a metal sheet (3) which is glued to the support panel (1) via an intermediate layer (2) of random fibre material.

2. Worktop according to Claim 1, **characterised in that** the metal sheet (3) is a special (stainless) steel sheet.

3. Worktop according to Claim 1 or 2, **characterised in that** the metal sheet (3), the intermediate layer (2) and the uppermost layer (1') of the support panel (1) have a machined bevel (4) on at least one of the worktop edges.

4. Worktop according to Claim 1 or 2, **characterised in that** the metal sheet (3) has on at least one straight edge of the worktop a cranked edging (5) in the form of a bevel which covers the edge of the intermediate layer (2) and the uppermost layer (1') of the support panel (1).

5. Worktop according to Claim 1 or 2, **characterised in that** the metal sheet (3) has on at least one of its edges an edge doubling or edge reinforcement (6) which is seated flush in a corresponding recess (7) of the support panel (1) and is glued therein.

6. Worktop according to any one of Claims 1 to 3 and 5, **characterised in that** the metal sheet (3) including any edge doubling (6) has an overall thickness of approximately 3 mm, and has a machined flat or rounded bevel (4) over only part of its overall thickness.

7. Worktop according to any one of Claims 1 to 3, 5 and 6, **characterised in that** it has a cornered and/or round geometry.

8. Worktop according to any one of Claims 1 to 7, **characterised in that** it has a cutout (9) with shoulder (10) into which a hob (11) is insertable flush with the surface, said hob being sealed by an elastic seal (13) against the top layer (3) of metal sheet.

9. Worktop according to any one of Claims 1 to 8, **characterised in that** it has a cutout (9) in which the top layer of metal sheet (3) protrudes relative to the support panel (1), and the front edge (3') of this protrusion is seated flush on the outwardly orientated upper edge (15') of an inserted hollow body (15) of sheet metal, such as a sink (16) or a lining element of a waste disposal unit (18), the hollow body (15) being attached to the support panel (1) by a connecting element (17) which reaches under its upper edge (15') and is connected to the support panel (1) and, if required, to the top layer (3).

10. Worktop according to Claim 9, **characterised in that** the connecting element (17) is a plastic element, in particular of cast resin, arranged under the upper edge of the inserted hollow body and fixed, especially glued, thereto and also to a portion of the exterior of the side wall of the hollow body and to the region of the cutout in the support panel (1) opposite thereto.

## Revendications

1. Plan de travail pour cuisine avec une plaque porteuse faite d'un matériau dérivé du bois et avec une surface collée, **caractérisé en ce que** la surface se compose d'une tôle métallique (3) qui est collée avec la plaque porteuse (1) à l'aide d'une couche intermédiaire (2) faite d'un matériau à base minérale, semblable à du non-tissé.

2. Plan de travail selon la revendication 1, **caractérisé en ce que** la tôle métallique (3) est une tôle d'acier spécial.

3. Plan de travail selon les revendications 1 ou 2, **caractérisé en ce que** la tôle métallique (3), -la couché intermédiaire (2) et la surface supérieure (1') de la plaque porteuse (1) présentent un biseau fraisé (4) sur au moins l'une des arêtes du plan de travail.

4. Plan de travail selon les revendications 1 ou 2, **caractérisé en ce que** la tôle métallique (3) présente, sur au moins une arête droite du plan de travail, un chanfrein bordé à vive arête (5) sous forme de biseau et qui recouvre le bord de la couche intermédiaire (2) et de la surface supérieure (1').

5. Plan de travail selon les revendications 1 ou 2, **caractérisé en ce que** la tôle métallique (3) présente, sur au moins l'un de ses bords, un doublement ou un renforcement (6) des arêtes, qui affleurent dans un creux correspondant (7) de la plaque porteuse (1) et y sont collés.

6. Plan de travail selon l'une des revendications 1, 3 et 5, **caractérisé en ce que** la tôle métallique (3), le cas échéant avec son doublement d'arête (6), possède une épaisseur totale d'environ 3 mm et ne présente un biseau fraisé plan ou arrondi (4) que sur une partie de l'épaisseur totale.

7. Plan de travail selon l'une des revendications 1 à 3, 5 et 6, **caractérisé en ce qu'**il présente une géométrie polygonale et/ou ronde.

8. Plan de travail selon l'une des revendications 1 à 7, **caractérisé en ce qu'**il présente une tranche (9) avec un épaulement (10) dans lequel on peut insérer à fleur une plaque de cuisson (11) qui est scellée par un joint d'étanchéité élastique (13) par rapport à la surface (3) en tôle métallique.

9. Plan de travail selon l'une des revendications 1 à 8, **caractérisé en ce qu'**il présente une tranche (9) dans laquelle la surface en tôle métallique (3) fait saillie par rapport à la plaque porteuse (1) et **en ce que** l'arête avant (3') de cette saillie affleure sur le bord supérieur, orienté vers l'extérieur (15'), d'un corps creux (15) en tôle métallique comme un bassin d'évier-timbre (16) ou d'un élément de revêtement d'un vide-ordures (18), le corps creux (15) étant fixé à la plaque porteuse (1) par un raccord (17) s'étendant sous son bord supérieur (15') et relié à la plaque porteuse (1) et, le cas échéant, à la surface (3).

10. Plan de travail selon la revendication 9, **caractérisé en ce que** le raccord (17) est un élément en matière synthétique, en particulier en résine moulée, disposé sous le bord supérieur du corps creux et solidement relié, spécialement collé, à celui-ci ainsi qu'à une partie de la face extérieure de la paroi latérale du corps creux et à la zone de la tranche de la plaque porteuse (1), zone opposée à ceux-ci.
